# EUROPÄISCHE PATENTSCHRIFT

(11) **EP 1 544 608 B1**
(45) Veröffentlichungstag und Bekanntmachung des Hinweises auf die Patenterteilung: **11.03.2015**
(21) Anmeldenummer: 04029911.7
(22) Anmeldetag: 16.12.2004
(51) Int. Cl.: G01N 27/401, G01N 27/36

(54) **Bedruckte Referenzysteme und Verfahren zu deren Herstellung**
Pressurised reference electrode and method for manufacturing it
Electrode de référence sous pression et procédé de fabrication

(30) Priorität: 17.12.2003 EP 03028997
(43) Veröffentlichungstag der Anmeldung: 22.06.2005
(73) Patentinhaber: Hamilton Bonaduz AG, 7402 Bonaduz (CH)
(72) Erfinder: Sovrano, Fabio, 8872 Weesen (CH); Thrier, Rolf, 8317 Tagelswangen (CH)
(74) Vertreter: RLTG

(56) Entgegenhaltungen:
- DE-A- 3 702 501
- DE-A- 10 053 979
- US-B2- 6 468 408
- PATENT ABSTRACTS OF JAPAN Bd. 1996, Nr. 10, 31. Oktober 1996 (1996-10-31) -& JP 08 145937 A (TOA DENPA KOGYO KK), 7. Juni 1996 (1996-06-07)
- PATENT ABSTRACTS OF JAPAN Bd. 1997, Nr. 03, 31. März 1997 (1997-03-31) -& JP 08 285811 A (TOA DENPA KOGYO KK), 1. November 1996 (1996-11-01)

## Beschreibung

Die vorliegende Erfindung betrifft eine bedruckte Bezugselektrode sowie ein Verfahren zu deren Herstellung.

Für die kontinuierliche Überwachung von Prozessen werden oft potenziometrische Messzellen und insbesondere pH-Messketten eingesetzt. Derartige elektrochemische Messzellen bestehen in der Regel aus einer Messelektrode mit ionensensitiver Membran und einer Bezugselektrode. Die Bezugselektrode kann getrennt ausgebildet und über eine Brücke mit der Messelektrode verbunden sein. Die Messelektrode und Bezugselektrode können zusammen auch in Form von Einstabmessketten vorliegen.

Eine wesentliche Voraussetzung für exakte und stabile Messungen in solchen Prozessen ist, dass die Bezugselektrode oder das Bezugselement eine über lange Zeit konstante Halbzellenspannung abgibt.

Es sind zahlreiche Bezugselektroden in vielfältiger Ausgestaltung bekannt. Sie bestehen meist aus einem Ableitelement in Form einer Elektrode zweiter Art, die in einen für die Bezugselektrode potenzialbestimmenden Bezugselektrolyten eintaucht. Der Bezugselektrolyt ist in den meisten Fällen eine konzentrierte Kaliumchloridlösung. Der elektrolytische Kontakt zwischen dem Ableitelement und dem Messmedium erfolgt durch ein in der Gehäusewand angeordnetes Diaphragma, z.B. einen porösen Keramikstift. Durch Verschmutzung des Diaphragmas durch das Messmedium oder durch das Eindringen von Messmedium in den Bezugselektrolyten kann es zu Fehlpotenzialen und damit zu einer Verfälschung der Messresultate kommen. Das Eindringen von Messmedium kann hierbei in zweierlei Hinsicht zu Fehlpotenzialen führen. Erstens durch die Verdünnung des potenzialbestimmenden Elektrolyten, was zu einer Abnahme Elektrolytkonzentration allgemein und im Falle einer Elektrode 2. Art zu einer Abnahme der potenzialbestimmenden Halogenidkonzentration führen kann und zweitens durch eindringende Elektrodengifte wie z.B. Sulfide, welche die Natur des Elementes 2. Art z.B. durch Bildung eines Ag/AgS-Elementes und somit dessen Standardpotenzial verändern können.

Dies ist insbesondere dann der Fall, wenn das Messmedium z.B. durch Druckaufschlag oder durch den statistischen Druck des Messmediums am Ort der Messkette einen höheren Druck aufweist als der Bezugselektrolyt. In diesem schlimmsten Falle ist mit konvektiven Stoffströmen ins Referenzsystem und entsprechend mit besonders schneller Vergiftung und schnellen Potenzialänderungen für die Referenzhalbzelle zu rechnen.

Um dies zu verhindern, wird der Referenzraum oft mit Druck beaufschlagt, sodass der Innendruck des Referenzraumes sicher höher ist als der Druck des Messmediums, um mindestens Verschmutzung durch konvektive Stoffströme zu vermeiden. Ferner erreicht man dadurch, dass während der Messung kontinuierlich Elektrolyt aus dem Referenzraum ausfließt, was für das Diaphragma reinigende Wirkung zeigt und so auch Fehlpotenziale durch Verschmutzung des Diaphragmas mit Messmedium zu minimieren vermag. Schließlich nicht zu vergessen ist, dass auf diese Weise eine Elektrode mit auslaufendem Elektrolyten erhalten wird, bei welcher der Stromkreis durch konvektiv transportierte Ionen geschlossen wird und Diffusionsspannungen am Diaphragma, welche oftmals eine weitere Fehlerquelle bei potenziometrischen Messungen darstellen, minimiert werden können.

Die Druckbeaufschlagung erfolgte in der Vergangenheit durch verschiedene Methoden. Die älteste bekannte Methode ist die des Druckmessgebers, einer bedruckbaren Armatur für die Messkette, in welche die Elektrode mit offenem Referenzraum eingebaut wird. Der hier beaufschlagte Druck überträgt sich aufgrund des offenen Referenzraumes auf den Bezugselektrolyten und garantiert so einen Überdruck zum Messmedium. Nachteilig an dieser Methode ist der hierfür notwendige teure Druckmessgeber (Armatur), in welchen die Elektrode einzubauen ist. Im Falle von unverdickten Elektrolyten kommt hinzu, dass die Elektrode durch Nachfüllen des Elektrolyten öfters gewartet werden muss.

Aufgrund dieser Nachteile wurden wartungsarme Elektroden entwickelt, bei welchen der druckbeaufschlagte Elektrolyt verdickt wurde und somit langsamer ausfließt. Solche Elektroden wurden als wartungsarm so ausgebildet, dass kein Elektrolyt mehr nachgefüllt werden kann.

DE 37 02 501 beschreibt eine pH-Messkette mit druckbeaufschlagter Bezugselektrode für mikrobiologische Prozesse. In der pH-Messkette ist oberhalb des Bezugselektrolyten ein Hohlraum angeordnet, in dem sich ein unter Druck stehendes Gas befindet, das mit dem Bezugselektrolyten in Verbindung steht. Durch das Gas in der Kammer des Referenzraumes kann ein Innendruck aufrechterhalten werden, der größer ist als der des Messmediums. In den Hohlraum mündet eine gasdicht in der Wandung des Gehäuses befestigte Zuführung für das Gas ein, die gasdicht verschließbar ist. In einer bevorzugten Ausführungsform ist diese Zuführung als Pt-Kapillare ausgebildet, welche nach Zuführung des Gases durch Abklemmen mit einer Zange verschlossen wird.

JP H08/285811 A beschreibt eine bedruckte Bezugselektrode, worin der Überdruck dadurch erzeugt wird, dass eine nadelförmige Röhre durch eine sich in der Wandung der Kammer befindende Dichtung gestochen wird, durch welche komprimierte Luft in den oberen Luft gefüllten Teil der Kammer injiziert wird. Hierbei ist wiederum eine zusätzliche Öffnung vorgesehen, um die Bedruckung vorzunehemen.

In DE 100 53 979 A1 werden bedruckte Referenzräume beschrieben, bei welchen der Druck durch gespannte federnde elastische Körper im Referenzraum erzeugt wird. Als elastische Körper werden entweder eine metallische Feder oder aber polymerer Schaum beschrieben. Zweck dieser Ausführung ist es, im Gegensatz zu DE 37 02 501 eine stabile und zuverlässige Messkette bereitzustellen, bei der eine Verletzungsgefahr möglichst vermieden wird. Beim Bruch der Elektrode würde sich der gespannte federnde Körper im Gegensatz zu komprimierter Luft nur langsam entspannen und ein Herumfliegen von Glasbruchstücken vermeiden. Ein weiterer Vorteil dieser Ausgestaltung ist laut Anmelder, dass im Gegensatz zu DE 37 02 501 keine teure Pt-Kapillare ins Glas der Referenzkammer eingebaut werden muss.

US 2002/0189943 A1 beschreibt einen bedruckten Elektrolytraum, in welchem der Druck über einen auf den Elektrolyten wirkenden Kolben aufgebaut wird. Der Kolben kann durch eine am Kolben befestigte Feder oder durch eine externe Kraft getrieben werden.

Eine weitere Art, einen Elektrolytfluss ins Messmedium sicherzustellen, ist das Zwischenschalten einer flüssigkeitsfördernden Pumpe zwischen Elektrolytraum und Messmedium, wobei hier sicherzustellen ist, dass die Förderrate gleichmäßig und klein ist, um ein allzu schnelles Auslaufen an Elektrolyt zu vermeiden.

WO 02/057765 A2 erwähnt hier die Verwendung einer Mikropumpe, wie sie in der Mikrosystemtechnik seit längerem bekannt sind. Diese Methode weist alle Vorzüge eines bedruckten Referenzraumes auf, da auch hier ein Ausfluss an Bezugselektrolyt sichergestellt wird, aber ohne den eigentlichen Referenzelektrolytraum unter Druck zu halten.

EP 1241471 A1 beschreibt eine bedruckte Referenzelektrode, umfassend einen gel- oder pastenförmigen Elektrolyten, der über ein Diaphragma in Kontakt mit einem Messmedium stehen kann, wobei die Referenzelektrode einen Hohlraum aufweist, der gasdicht verschlossen wird und im Inneren Mittel zum Erzeugen eines Überdrucks enthält. Geeignete Mittel sind beispielsweise mechanische Systeme mit einer Druckfeder oder bevorzugt chemische Systeme, die bei Aktivierung Gas abspalten. Dadurch wird in der Referenzelektrode ein Druck erzeugt.

DE 19639372 A1 betrifft eine Vorrichtung, bei der der Elektrolyt durch ein Kolbensystem unter Druck gesetzt wird.

Alle bisherigen Methoden sind jedoch technisch aufwändig oder mit nicht unwesentlichen Kosten verbunden. Es bestand daher weiterhin das Bedürfnis ein Verfahren zu finden, mit dem Elektroden auf einfache Weise bedruckt werden können. Eine Aufgabe der vorliegenden Erfindung war es daher, ein Bedruckungsverfahren für Bezugselektroden bereitzustellen, welches einfach durchführbar ist, keine technisch aufwändigen Apparaturen oder Hilfsmittel benötigt und welches eine kostengünstige Herstellung von Elektroden ermöglicht.

Diese Aufgabe wird erfindungsgemäß gelöst durch ein Verfahren zur Herstellung einer Bezugselektrode, gemäß Anspruch 1.

Erfindungsgemäß wird im Gegensatz zum Stand der Technik der Druckaufschlag in eine geschlossene Kammer der Bezugselektrode, insbesondere einen geschlossenen Referenzraum durch das poröse Diaphragma direkt bewerktstelligt. Dadurch sind, im Gegensatz zu den Bedruckungsmethoden des Standes der Technik, keine zusätzlichen Zuleitungen nötig und es kann beispielsweise auf die Verwendung einer teuren Pt-Kapillare verzichtet werden. Das Druckmedium wird erfindungsgemäß vielmehr direkt über einen Teil der Wandung der Bezugselektrode eingebracht.

Als Bezugselektrolyt für eine Referenzelektrode ist grundsätzlich jeder Stoff geeignet, der eine konstante Ionenaktivität der potentialbestimmenden Spezies gegenüber der Referenzelektrode zeigt und daher zu einem konstanten Potential an der Referenzelektrode führt und der selber eine elektolytische Leitfähigkeit zeigt. Die potentialbestimmende Spezies bei Ag/AgCl-Elektroden zweiter Art ist beispielsweise das Chloridion. Der erfindungsgemäß eingesetzte Elektrolyt ist fließfähig und kann so, nach Bedruckung das Diaphragma überlagern und somit ein Austreten des Gases verhindern.

Wesentlich für das Verfahren der vorliegenden Erfindung ist es, dass ein Druck im Referenzraum dadurch erzeugt wird, dass man ein Gas durch das Diaphragma, über welches später der Elektrolyt mit dem Messmedium in Verbindung steht, in die Kammer eindringt.

Erfindungsgemäß erfolgt die Bedruckung mittels eines Gases durch das poröse Elektrodendiaphragma, bei dem es sich beispielsweise um eine poröse Silica- oder Zirkonoxidkeramik handeln kann. Während eine Bedruckung grundsätzlich auch durch Pressen einer Flüssigkeit durch das Diaphragma in den Referenzraum möglich ist, muss bei dieser Vorgehensweise oftmals mit sehr hohem Druck und über längere Zeit mit Flüssigkeit bedruckt werden, da die Elektrodendiaphragmen für Flüssigkeiten im allgemeinen nur wenig durchlässig sind. Durch ausreichend hohe Bedruckungszeiten und -drücke können allerdings sehr hohe Drücke (hydraulisch) erzeugt werden.

Erfindungsgemäß erfolgt die Bedruckung mittels eines Gases, beispielsweise mittels Luft. Während sich mit elastischen, festen Stoffen, wie sie im Stand der Technik zur Bedruckung eingesetzt wurden (vergleiche DE10053979) nur begrenzte Überdrucke im Bereich von kleiner 2 bar einstellen lassen, können mit der erfindungsgemäßen Methode unter Verwendung komprimierter Gase und beispielsweise komprimierter Luft ohne Weiteres Drücke bis 10 bar Überdruck und mehr erreicht werden. In einer Ausführungsform befindet sich Luft im Elektrolytraum (er ist also nicht luftleer), wodurch Luftkompression und -konvektion im fließfähigen Elektrolyten möglich ist.

Besonders vorteilhaft ist bei der erfindungsgemäßen Methode weiterhin, dass der Druck durch Einpressen eines Gases durch die in jeder Elektrode ohnehin erhaltene Diaphragmaöffnung erzielt wird. Weitere Öffnungen müssen nicht bereitgestellt werden. Weiterhin ist es nicht notwendig, zusätzliche Zuführöffnungen, wie sie im Stand der Technik verwendet werden (vergleiche DE10053979), nach dem Bedrucken zu verschließen.

Ein weiterer Vorteil des erfindungsgemäßen Bedruckungsverfahren besteht darin, dass aufgrund des hohen erzielbaren Referenzdrucks ein effektiver Schutz gegen hohe Prozessdrücke bereitgestellt werden kann.

Ein weiterer wesentlicher Vorteil der erfindungsgemäßen Bedruckungsmethode ist die Tatsache, dass die Bedruckung parallel durchgeführt werden kann, also eine Vielzahl von Referenzelektroden gleichzeitig in einem Arbeitsgang bedruckt werden kann. Eine individuelle Behandlung jeder einzelnen Bezugselektrode (beispielsweise das Verschließen der Pt-Kapillare mit einer Zange) ist nicht erforderlich. Eine parallele Bedruckung kann bevorzugt dadurch bewerkstelligt werden, dass eine Anzahl von geschlossenen Referenzräumen in einen Druckbehälter eingelegt oder eingeschraubt werden und anschließend gleichzeitig druckbeaufschlagt werden. Eine solche serienmäßige Produkten ist einfach, robust und kostengünstig.

Auf diese Weise wird eine bedruckte Bezugselektrode gemäß Anspruch 3 bereitgestellt. Dies bedeutet insbesondere, dass die Bezugselektrode eine Kammer umfasst, welche unter Überdruck steht. Unter Überdruck wird jeder Druck von ≥ 1,1 bar verstanden, wobei die Kammer erfindungsgemäß ≥ 4 bar aufweist. Der Druck in der Bezugselektrode kann theoretisch beliebig groß sein, bevorzugt ist er aufgrund technischer Überlegungen jedoch maximal 20 bar, mehr bevorzugt maximal 10 bar, insbesondere maximal 8 bar und am meisten bevorzugt maximal 6 bar.

Der Überdruck in der Kammer kann bezogen auf die beabsichtigte Verwendung bevorzugt so eingestellt werden, dass der Druck in der Kammer größer als der Druck des vorgesehenen Messmediums ist. Bevorzugt beträgt der Druck in der Kammer mindestens das 1,1-fache, mehr bevorzugt mindestens das 1,5-fache, noch mehr bevorzugt mindestens das 2-fache und am meisten bevorzugt das 4-fache des Drucks des Messmediums.

Der Überdruck in der Bezugselektrode wird erfindungsgemäß durch ein Druckmedium erzeugt, insbesondere durch ein Gas.

Aus technischen Überlegungen sind Sauerstoff, Stickstoff oder/und Luft bevorzugte Gase.

Besonders bevorzugt weist das poröse Material der Wandung der Kammer eine höhere Permeabilität für das Druckmedium als für den Bezugselektrolyten auf. Insbesondere eine mindestens zweifache, mehr bevorzugt eine mindestens fünffache, insbesondere eine mindestens 50-fache, noch mehr bevorzugt eine mindestens 100-fache, besonders bevorzugt eine mindestens 500-fache und am meisten bevorzugt eine mindestens 1000-fache Permeabilität.

Das Druckmedium, weist vorzugsweise eine Viskosität auf, die kleiner als die Viskosität des Bezugselektrolyten ist, insbesondere mindestens 100-mal kleiner und bevorzugt mindestens 1000 mal kleiner als die Viskosität des Bezugselektrolyten. Bevorzugt weist das Druckmedium eine Viskosität von mindestens 0,1 mPa·s, mehr bevorzugt von mindestens 1 mPa·s und bis zu 5.000 mPa·s, mehr bevorzugt bis zu 1.000 mPa·s, noch mehr bevorzugt von bis zu 500 mPa·s, insbesondere von bis zu 100 mPa·s und besonders bevorzugt von bis zu 5 mPa·s auf. Besonders bevorzugt weist das Druckmedium eine Viskosität zwischen 0,3 und 1 mPa·s auf. Alle Viskositätsangaben hierin beziehen sich auf die dynamische Viskosität bei einer Messtemperatur von 25 °C.

Erfindungsgemäß wird das Druckmedium direkt über einen Teil der Wandung der Kammer aus porösem Material in die Bezugselektrode eingebracht. Der Teil der Wandung ist gleichzeitig für das Inkontaktbringen der Bezugselektrode mit einem Messmedium ausgebildet. Das poröse Material weist dabei vorzugsweise Porengrößen im Bereich von 0,1 bis 10 µm (angegeben als Porenradius), mehr bevorzugt von 1 bis 5 µm (angegeben als Porenradius) auf. Geeignete Materialien für das poröse Material sind beispielsweise Zirkonoxid oder Silicate sowie andere bekannte poröse "liquid junctions", wie z.B. poröse gesinterte Materialien, Holz und natürliche Fasermaterialien, Asbestfaserbündel, Faserbündel, insbesondere aus Cellulosen oder/und Watte, Wattebüschel, verdrillte Drähte, z.B. verdrillte Pt-Drähte, poröse Gläser, z.B. CPG ("Controlled Pore Glass"), insbesondere Vycor, ein sogenanntes "thirsty glass" (Dow Corning), welches über kontrollierte Poren verfügt, Glassiebe, poröse Kieselgele oder gesinterte poröse Polymere, wie z.B. Teflon oder Polypropylen. Bevorzugt sind 0,1 % bis 50 %, insbesondere 1 % bis 10 % der Wandung der Kammer aus porösem Material. Besonders bevorzugt besteht das poröse Material aus einem zylindrischen Stab (z.B. mit einem Durchmesser von 0,5 mm bis 1,5 mm, insbesondere 0,8 mm bis 1,2 mm). Das poröse Material hat dabei bevorzugt einen Porenradius von 0,5 µm bis 1 µm und eine Porosität von 25 % bis 40 %.

Erfindungsgemäß wird ein unterschiedlicher Materialfluss beim Bedrucken bzw. Druckaufschlag der Bezugselektrode durch das Bedruckungsmedium, insbesondere ein Gas und beim Gebrauch der Elektrode, bei dem Elektrolyt aus dem Referenzelektrolyten in entgegengesetzter Richtung zur Bedruckungsrichtung ausläuft, erzielt.

Dabei werden geeigneterweise Porengröße und Permeabilität bzw. Viskosität von Bezugselektrolyt und Bedruckungsmedium so aufeinander eingestellt, dass einerseits eine vernünftig kurze Bedruckungszeit, insbesondere von ca. 1 bis 24 Stunden eingehalten werden kann und andererseits eine ausreichende lange Lebensdauer der Elektrode gewährleistet wird, wobei der Elektrolyt nur langsam auslaufen sollte (z.B. mit einer Auslaufrate von < 5 ml/Jahr). Die Durchflussgeschwindigkeit durch einen porösen Körper kann durch die Gleichung von Hagen-Poiseuille beschrieben werden. Danach ist die Durchflussgeschwindigkeit dV/dt umgekehrt proportional zur dynamischen Viskositätg und direkt proportional zur angelegten Druckdifferenz Δp. Diese Gleichung gilt sowohl beim Bedrucken als auch beim Auslaufen. Beim Bedrucken wird üblicherweise ein hoher Druck angelegt, beispielsweise > 10 bar, mehr bevorzugt > 20 bar und insbesondere mindestens 40 bar, um eine kurze Bedruckungszeit zu erhalten, wobei η = Viskosität des Bedruckungsmediums. Beim Auslaufen stellt Δp die Druckdifferenz zwischen Referenzelektrode und Messmedium dar und η = die Viskosität des resultierenden Elektrolyten (vorgelegter Elektrolyt vermischt mit Bedruckungsmedium).

Erfindungsgemäß wird durch das Zurücklaufen des Bezugselektrolyten nach dem Bedrucken in den porösen Hohlkörper eine Art Rückschlagventil gebildet. In einer weiteren bevorzugten Ausführungsform enthält der Elektrolyt Polymere, insbesondere lineare Polymere, welche zum Verdicken des Elektrolyten eingesetzt werden und aufgrund ihrer Molekulargröße nicht durch die Poren des poröse Diaphragmas gelangen können. In diesem Fall bildet das Diaphragma eine Barriere für das Polymer bzw. das Polymer trägt zu einem osmotischen Druck bei, welcher so in der Bezugselektrolytkammer aufgebaut wird und dem Auslaufen entgegenwirkt. Für einen Porenradius von beispielsweise 0,4 bis 0,6 µm wurde festgestellt, dass eine Molekulargröße Mw = 500.000 oder größer ausreichend ist, um eine solche "Verstopfung" des Diaphragmas zu erzielen.

Da erfindungsgemäß der Überdruck über einen Teil der Wandung eingebracht wird, kann es sich bei der Bezugselektrode um ein System mit einem geschlossenen Gehäuse handeln, beispielsweise einem geschlossenen Gehäuse aus Glas oder Kunststoff. Die Bezugselektrode weist deshalb vorzugsweise keine weiteren Zuleitungen oder Öffnungen auf.

Die mit Druck zu beaufschlagende Kammer der Bezugselektrode weist einen Bezugselektrolyten auf. Vorzugsweise ist der Bezugselektrolyt ein fließfähiger und besonders bevorzugt ein fließfähiger verdickter Elektrolyt. Beim Druckaufschlag mit dem Druckmedium wird der Bezugselektrolyt verdrängt, sodass das Druckmedium in die Kammer eindringen kann. Aufgrund der Schwerkraft kann nach erfolgter Druckbeaufschlagung der Bezugselektrolyt wieder über die Diaphragmaöffnung zurückfließen und somit ein Austreten des Druckmediums durch das poröse Material des Diaphragmas verhindert werden.

Für die erfindungsgemäße Art der Bedruckung ist es besonders vorteilhaft, wenn der Bezugselektrolyt und das Bedruckungsmedium so ausgewählt sind, dass sich die Permeabilität der beiden Materialien für das poröse Material so stark unterscheidet, dass der Bezugselektrolyt nach dem Druckaufbau in der Bezugselektrolytkammer wieder zurückfließen kann und das poröse Material durch den Überdruck in der Kammer ähnlich einem Rückschlagventil verstopft wird, sodass ein Austreten des Druckmediums vermieden wird. Der Bezugselektrolyt weist vorzugsweise eine Viskosität von mindestens 20 mPa·s, mehr bevorzugt mindestens 40 mPa·s, mehr bevorzugt mindestens 100 mPa·s und insbesondere mindestens 1000 mPa·s auf und bis zu 20 Pa·s, insbesondere bis zu 5 Pa·s. Schlecht fließende Bezugselektrolyte können durch erhöhte Temperatur beim Bedrucken, z.B. mindestens 50 °C aufgrund ihrer Gravitation fließfähig gemacht werden und somit nach Befüllen der Referenzelektrode mit dem Druckmedium zurück über das poröse Diaphragma fließen und dieses verschließen. Die Viskosität des Bezugselektrolyten wird dabei vorteilhafterweise an die Diaphragmaporosität angepasst. Eine solche Anpassung erfolgt bevorzugt dadurch, dass dem Bezugselektrolyten ein Verdickungsmittel zugesetzt ist. Als Bezugselektrolyt selbst wird vorzugsweise eine wässrige KCI-Lösung eingesetzt. Als Verdickungsmittel werden vorzugsweise lineare Polymere, insbesondere hydrophile lineare Polymere verwendet. Beispiele für solche Verdicker sind lineare Polyacrylate und deren Derivate, insbesondere wasserlösliche Polyacrylate, Cellulosederivate, Stärkederivate, Dextrosen, Polyvinylalkohole, Poly-(N-Vinylpyrrolidone), Poly-(2-vinylpyridine), Polyethylenoxide, Polyethylenglykole und Derivate davon, wie beispielsweise Polyethylenglykolmonomethylether, Polyvinylacetate, Polymaleinsäuren, Polyvinylmethylether, Gelatine, Agar-Agar und Alginate. Besonders bevorzugt werden Polymere mit Kettenlängen eingesetzt, die nur schlecht und besonders bevorzugt überhaupt nicht durch die Poren des porösen Diaphragmas durchtreten können. Bevorzugt weisen die als Verdicker verwendeten Polymere deshalb ein Molekulargewicht Mw von ≥ 100.000 Da, insbesondere ≥ 200.000 Da und besonders bevorzugt von ≥ 500.000 Da auf. Für ein Zr₂O-Diaphragma mit einem Porenradius von 0,1 bis 1 µm, insbesondere von 0,4 bis 0,6 µm wurde beispielsweise für das Verdickersystem pDMA bei einem Molekulargewicht Mw > 500.000 ein Durchdringen vollständig verhindert.

Es ist auch möglich, den Bezugselektrolyten mit viskosen organischen Lösungsmitteln, insbesondere wasserlöslichen viskosen organischen Lösungsmitteln, wie etwa Di- oder Trialkoholen (z.B. Glycerin, Ethylenglykol oder Propylenglykol), Polyolen (z.B. hydroxyendständige Polyester oder/und Polyether, wie sie als Grundbaustoffe bei der Polyurethan-Herstellung Verwendung finden) oder Aminen (z.B. Triethanolamin) zu verdicken. Solche organischen Lösungsmittel weisen bevorzugt eine Viskosität von > 40 mPa s auf. Weitere Beispiele für als Verdickungsmittel geeignete organische Lösungsmittel sind Cyclohexanol und Diethanolamin.

Ein besonders bevorzugtes Verdickungsmittel ist lineares Polydimethylacrylamid (vgl. US 6,468,408; pDMA). US 6,468,408 beschreibt lösungsmittel- und säurebeständige Polymere, welche aufgrund ihrer Resistenz vorzugsweise als Referenzmaterialien eingesetzt werden können. Polydimethylacrylamid weist gegenüber herkömmlichen Polyacrylamiden den zusätzlichen Vorteil auf, dass es weniger giftig ist und dass es kein Acrylamid enthält. Insbesondere bei Anwendungen im Bio-, Pharma- oder Lebensmittelbereich ist ein Acrylamid-freier Elektrolyt von besonderem Interesse. Erfindungsgemäß wird Polydimethylacrylamid unvernetzt und somit fließfähig eingesetzt (und nicht als Festelektrolyt). Ein solcher fließfähiger Elektrolyt weist weiterhin die aufgrund des Materials bedingten Vorteile auf, nämlich eine gute Säurestabilität (nicht hydrolisierbar), eine hohe Lösungsmittelstabilität (fällt in Alkohol nicht aus) und eine Nicht-Giftigkeit (kein Acrylamid im Prozess).

Lineares Polydimethylacrylamid ist verdickend und fließfähig und hat den Vorteil, Acrylamid-frei und somit wesentlich weniger giftig zu sein. Polydimethylacrylamid weist eine gute Hydrolysebeständigkeit und eine gute Säure- und Lösungsmittelverträglichkeit auf und wird durch bioaktive Stoffe und Enzyme nur wenig angegriffen. Dies ist insbesondere beim Einsatz in Bioprozessen von Bedeutung, da einerseits Bakteriengifte in diesen Prozessen unerwünscht sind und andererseits sich das Polmyer durch die Bakterienenzyme aus diesen Prozessen nicht zu einem niederviskosen oder dünnflüssigen Elektrolyten abbauen darf. Die Säure- und Lösungsmittelresistenz hat vor allem Vorteile bei Messungen im chemischen Bereich, in denen viele Polymere durch Hydrolyse abgebaut werden oder in organischen Lösungsmitteln ausfallen können. Beides führt ebenfalls zum Verlust der für diese Anwendung notwendigen Viskosität des Elektrolyten und somit zu reduzierter Elektrodenlebensdauer.

Ein weiterer Gegenstand der Erfindung ist eine Bezugselektrode, welche mit dem oben beschriebenen Verfahren erhältlich ist sowie eine eine solche Elektrode enthaltende Messkette. Die erfindungsgemäße Bezugselektrode weist insbesondere mit Ausnahme des Abschnitts aus porösem Material keine Öffnung oder Zuführung auf. Eine solche zusätzliche Öffnung oder Zuführung, wie im Stand der Technik beschrieben, ist bei den erfindungsgemäßen Bezugselektroden nicht erforderlich. Unter Öffnung oder Zuführung wird dabei auch eine inzwischen reversibel oder irreversibel verschlossene Zuführung verstanden, durch die Druck eingebracht werden konnte und die nach dem Bedrucken verschlossen, z.B. abgeschmolzen, wurde. Die erfindungsgemäße Bezugselektrode wird durch die immer vorhandene und auch nach der Bedruckung noch vorhandene poröse Öffnung bedruckt, während für die Bedruckung selbst keine weitere Öffnung erforderlich ist. Im Gegensatz dazu weisen Elektroden gemäß dem Stand der Technik während des Bedruckens weitere Öffnungen auf, durch welche der Druck appliziert wird, wobei diese Öffnungen dann erst nach der Bedruckung verschlossen werden, damit der Druck nicht mehr entweicht. Solche weiteren Öffnungen, wie sie im Stand der Technik vorgesehen sind, sind beispielsweise PT-Kapillaren, anulare Öffnungen, welche erst nach dem Bedrucken verschmolzen werden oder ein Septum.

Die Erfindung betrifft weiterhin elektrochemische Messzellen, welche eine erfindungsgemäße Bezugselektrode umfassen. Bevorzugt sind z.B. Referenzsysteme, die in amperometrischen Sensoren, in der Voltametrie oder in Batterien, wie z.B. in Brennstoffzellen, zum Einsatz kommen und erfindungsgemäß bedruckt wurden. Weiterhin bevorzugt ist der Einsatz erfindungsgemäß bedruckter Bezugselektroden in potenziometrischen Messketten.

Die Erfindung wird durch die beigefügten Figuren und die folgenden Beispiele weiter erläutert.

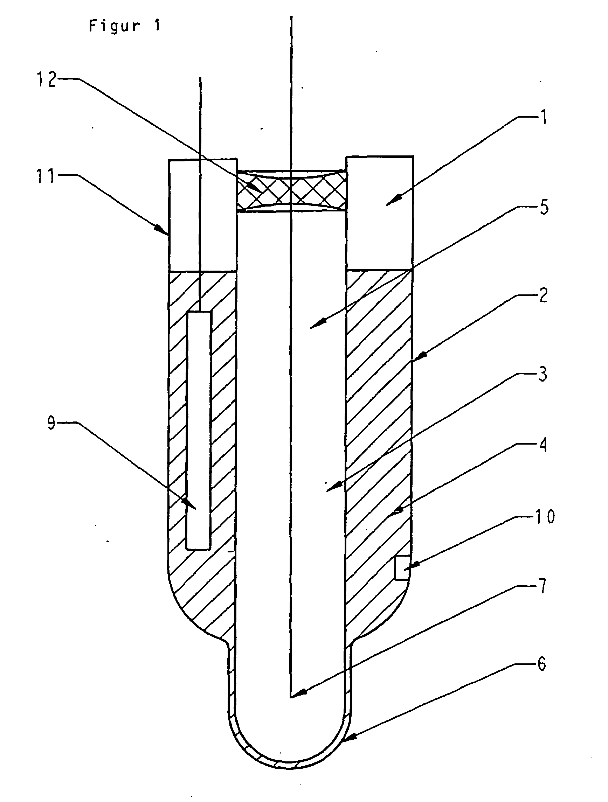

Figur 1 zeigt eine Elektrode mit geschlossenem Referenzraum, welcher einen verdickten, fließfähigen Bezugselektrolyten und ein poröses Diaphragma enthält.

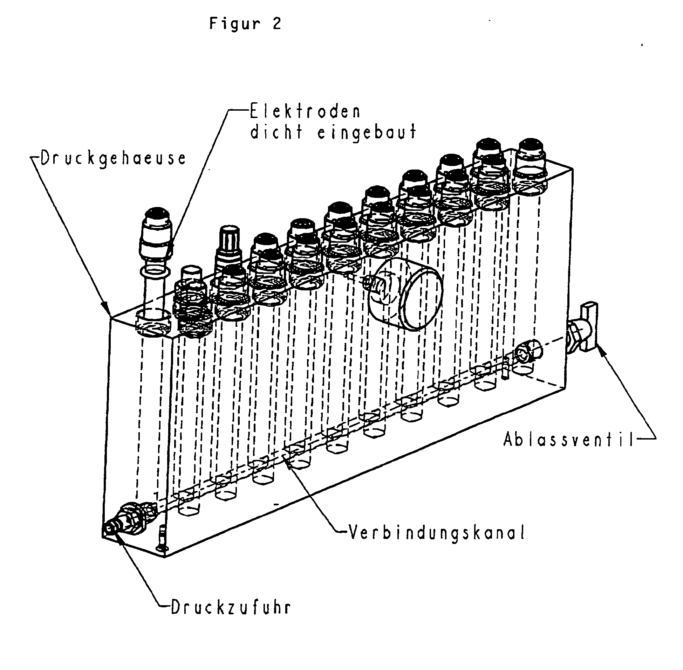

Figur 2 zeigt eine bevorzugte Apparatur zum Bedrucken des Elektrolytraums mit eingeschraubten Elektroden. Nur die Diaphragma-Öffnungen sind dem Druck ausgesetzt. Die Druckapparatur wird über Dichtringe zwischen Apparatur und Elektrodensteckköpfen, welche zur Apparatur herausragen, gedichtet.

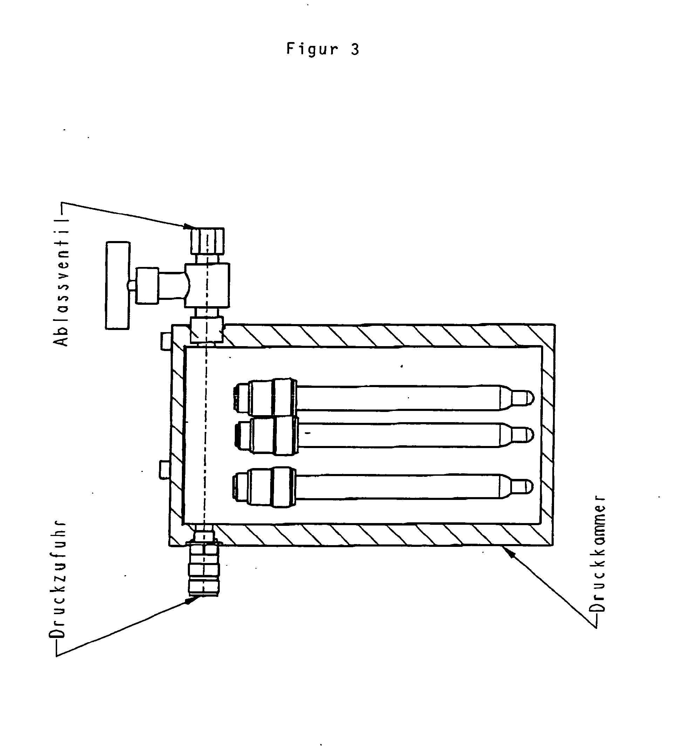

Figur 3 zeigt eine Druckapparatur, in welche ganze Elektroden eingestellt werden können.

### Beispiele

### Beispiel 1

| | |
|---|---|
| Poröses Diaphragma: | Siliciumoxid mit Porenradien von 0,5 µm |
| Elektrolyt: | 10 %-ige Polydimethylacrylamidlösung Polydimethylacrylamid mit einem MolGewicht (Molekulargewichts-Gewichtsmittel) Mw > 500.000 wie folgt hergestellt: |

50 g Dimethylacrylamid und 430 g deion Wasser und TEMED (Tetramethyl) werden durch Zugabe von Ammoniumpersulfatlösung radikalisch polymerisiert. Zu 450 g der resultierenden viskosen Polymerlösung (Mw > 500.000; GPC) werden 91,6 g KCI und 360,5 g Glycerin gegeben. Bei erhöhten Temperaturen neigt dieser Elektrolyt zu Polymerausfällungen. Diese Neigung wird durch hohe Salzkonzentrationen verstärkt. Mit 40 % Glycerin und obiger KCl-Menge können Elektrolyte erhalten werden, welche bis 135 °C stabil sind. Durch Erhöhung der Glycerinmenge bzw. Reduktion der KCI-Menge kann die Temperaturbeständigkeit weiter erhöht werden. Ag/AgCl-Referenzsysteme mit diesem Elektrolyten weisen aufgrund der niedrigeren KCl-Konzentration zu herkömmlichen Elektrolyten (3 mol/l KCl ) eine Abweichung von ca 8 mV auf, d.h. der Nullpunkt solch einer Messkette in Puffer pH 7 ist um ca. 8 mV verschoben. Dieser kann durch entsprechende Anpassungen des Innenpuffers (Puffer im inneren Ableitsystem für die ionensensitive Membran) korrigiert werden.

### Enzusammensetzung des Elektrolyten:

| | |
|---|---|
| Wassergehalt | ca. 43 % |
| Glyceringehalt | ca. 40 % |
| KCI-Konzentration in Wasser | 3,15 mol/l |

### Herstellung der Elektroden:

Füllen des Referenzraumes mit Elektrolyt, wobei ein gasförmiger Hohlraum von 20 % des Referenzraumes auszubilden ist. Der gasförmige Hohlraum ist komprimierbar und hat bei Temperaturschwankungen den Zweck eines komprimierbaren Raumes, welcher hydraulische Drücke verhindert.

Waagrechtes Einstellen oder Einschrauben der Elektroden in die Bedruckungsapparatur.

Druckbeaufschlagung der Elektroden mit Stickstoff:
3,5 Min. 40 bar
über Nacht mit 10 bar

Es resultiert ein Elektrodenüberdruck von 4 bis 6 bar im Referenzraum mit einem Elektrolytausfluss von < 0,004 g*bar^{-1*}h⁻¹.

Diese Elektrode ist besonders geeignet für die Kontrolle von Bioprozessen, in welchen nicht giftige, gegen Enzyme beständige Verdickungsmittel einzusetzen sind. Der auslaufende Elektrolyt zeigt reinigende Wirkung für das Diaphragma und minimiert die in Bioprozessen bekannten Diaphragmapotenziale, welche durch am Diaphragma absorbierte Eiweiße auftreten können.

### Beispiel 2

| | |
|---|---|
| Poröses Diaphragma: | Zirkonoxid mit Porenradien von 8 µm |
| Referenzsystem: | Glasmembran in gepuffertem Elektrolyten pH ca. 4,6 |
| Elektrolyt: | Acetatgepufferte 10 %-ige Polydimethylacrylamidlösung |
| | Polydimethylacrylamid mit einem MolGewicht (Molekulargewichts-Gewichtsmittel) Mw > 800.000 wie folgt |
| | hergestellt: |

50 g Dimethylacrylamid und 430 g deion Wasser und TEMED (Tetramethyl) werden durch Zugabe von Ammoniumpersulfatlösung radikalisch polymerisiert. Zu 400 g der resultierenden viskosen Polymerlösung (Mw > 800.000, GPC) wird folgendes zugesetzt:
17,4 g deion Wasser
275,2 g Glycerin
82,00 g KCI
30,1 g Na-Acetat
30 g Eisessig

### Endzusammensetzung des Elektrolyten pH 4,6:

| | |
|---|---|
| Wassergehalt: | ca. 45 % |
| Glyceringehalt | ca. 32 % |
| KCI-Konzentration in Wasser | ca. 2,81 mol/l |
| Acetatkonzentration in Wasser | ca. 1,88 mol/l |

### Herstellung der Elektroden:

Füllen des Referenzraumes mit Elektrolyt, wobei ein gasförmiger Hohlraum von 20 % des Referenzraumes auszubilden ist. Der gasförmige Hohlraum ist komprimierbar und hat bei Temperaturschwankungen den Zweck eines komprimierbaren Raumes, welcher hydraulische Drücke verhindert.

Waagrechtes Einstellen oder Einschrauben der Elektroden in die Bedruckungsapparatur.

Druckbeaufschlagung der Elektroden mit Stickstoff:
3,5 Min. 40 bar
über Nacht mit 10 bar

Es resultiert ein Elektrodenüberdruck von 4 bis 6 bar im Referenzraum mit einem Elektrolytausfluss von < 0,005 g*bar⁻¹*h⁻¹

Diese Elektrode ist besonders geeignet für die Kontrolle chemischer Prozesse. Das Referenzsystem ist ein hochohmiges pH-Referenzsystem, welches nur auf pH-Änderung des Elektrolyten reagiert. Vergiftet werden können solche Elektroden also vor allem durch Messmedien, welche einen anderen pH-Wert aufweisen als der Referenzelektrolyt. Nur durch Verdünnung des Referenzelektrolyten ändert sich der pH-Wert dieses Elektrolyten und somit das Referenzsignal der Referenzelektrode nur wenig. Ferner sind solche Referenzsysteme nur schwer zu vergiften, da es sich um eine pH-Referenz handelt und nicht um eine Referenz zweiter Art. Nachteilig an einer solchen Elektrodenanordnung ist die hohe Referenzimpedanz, welche den Einsatz von speziellen Transmittern mit entsprechend hochohmigen Eingängen erfordert.

Um mit solch einem Elektrolyten eine Elektrode mit Messkettennullpunkt pH 7 zu erhalten, ist die innere Ableitung (Glasmembran/innerer Elektrolyt/Ag/AgCl-Ableitsystem) entsprechend anzupassen bzw. der innere Elektrolyt ist ebenfalls mit einem pH um 4,6 herzustellen.

### Beispiel 3

Analog Beispiel 1 mit Hydroxyethylcellulose verdicktem Elektrolytsystem.

### Beispiel 4

Analog Beispiel 1: Elektrolyt 3M KCI verdickt mit 40 % Glycerin
Porenradius Diaphragma ca. 1 µm
Ausflussrate ca. 0,007 g/(bar*⁻¹h)

### Beispiel 5

Analog Beispiel 1 mit Polyacrylamid verdickt:
100 g Acrylamid, 900 g deion. Wasser, 223,7 g KCI und TEMED werden durch Zugabe von Ammoniumpersulfatlösung radikalisch polymerisiert.

### Endkonzentration des Elektrolyten:

| | |
|---|---|
| Wassergehalt: | ca. 73 % |
| Polymergehalt: | ca. 10 % |
| KCI-Konzentration in Wasser: | 3,0 mol/l |

10 %-ige Polyacrylamidlösung mit 3 mol/l KCI (Viskosität 3,5 bis 4,5 Pas) Auslaufrate ca. 0,005 g/bar/h.

## Patentansprüche

1. Verfahren zur Herstellung einer Bezugselektrode, wobei die Bezugselektrode eine Kammer umfasst, die einen Hohlraum und einen Bezugselektrolyten aufweist, wobei ein Teil der Wandung der Kammer aus porösem Material zum Inkontaktbringen der Bezugselektrode mit einem Messmedium ausgebildet ist, und wobei der Hohlraum ein unter einem Druck von ≥ 4 bar stehendes Gas enthält,
**dadurch gekennzeichnet,**
**dass** man zur Erzeugung des Überdrucks in der Bezugselektrode ein Gas durch das poröse Material der Wandung in den Hohlraum einbringt.

2. Verfahren nach Anspruch 1,
**dadurch gekennzeichnet,**
**dass** die Permeabilität des porösen Materials der Wandung der Kammer für das zur Erzeugung des Überdrucks eingebrachte Gas höher ist als für den Bezugselektrolyten.

3. Bezugselektrode, umfassend eine Kammer, die einen Hohlraum und einen Bezugselektrolyten aufweist, wobei ein Teil der Wandung der Kammer aus porösem Material zum Inkontaktbringen der Bezugselektrode mit einem Messmedium ausgebildet ist, und wobei der Hohlraum ein unter einem Druck von ≥ 4 bar stehendes Gas enthält,
**dadurch gekennzeichnet,**
**dass** die unter Überdruck stehende Kammer mit Ausnahme des Abschnitts aus porösem Material keine Öffnung aufweist, wodurch für die Bedruckung keine weitere Öffnung vorgesehen war.

4. Bezugselektrode nach Anspruch 3,
**dadurch gekennzeichnet,**
**dass** das in dem Hohlraum vorliegende Gas Sauerstoff, Stickstoff oder/und Luft ist.

5. Bezugselektrode nach Anspruch 3 oder 4,
**dadurch gekennzeichnet,**
**dass** sie einen zähflüssigen Bezugselektrolyten aufweist, welcher als Verdickungsmittel ein lineares Polymer enthält, insbesondere ein hydrophiles, lineares Polymer ausgewählt aus Polyacrylaten, Cellulosederivaten, Stärkederivaten, Dextrosen, Polyvinylalkohole, Poly-(N-Vinylpyrrolidone), Poly-(2-vinylpyridine), Polyethylenoxide, Polyethylenglykole und Derivate davon, wie beispielsweise Polyethylenglykolmonomethylether, Polyvinylacetate, Polymaleinsäuren, Polyvinylmethylether, Gelatine, Agar-Agar und Alginate.

6. Bezugselektrode nach einem der Ansprüche 3 bis 5,
**dadurch gekennzeichnet,**
**dass** der Bezugselektrolyt ein organisches Lösungsmittel als Verdicker enthält, insbesondere ausgewählt aus Glycerin, Ethylenglykol, Propylenglykol, Diethanolamin, Triethanolamin und hydroxyendständigen Polyethern oder/und Polyestern.

7. Bezugselektrode nach einem der Ansprüche 3 bis 6,
**dadurch gekennzeichnet,**
**dass** das poröse Material der Wandung ausgewählt ist aus Zirkonoxid oder Siliciumoxid mit Porenradien im Bereich von 0,1 bis 10 µm.

8. Elektrochemische Messzelle, umfassend eine Bezugselektrode nach einem der Ansprüche 3 bis 7, sowie eine Messelektrode.

## Claims

1. A method for manufacturing a reference electrode, wherein the reference electrode comprises a chamber that includes a cavity and a reference electrolyte, wherein part of the wall of the chamber is made from porous material for bringing the reference electrode into contact with a measuring medium, and wherein the cavity contains a gas that is at a pressure of ≥ 4 bar, **characterised in that**, for generating the positive pressure in the reference electrode, a gas is introduced into the cavity through the porous material of the wall.

2. A method according to Claim 1, **characterised in that** the porous material of the wall of the chamber is more permeable to the gas introduced for generating the positive pressure than it is to the reference electrolyte.

3. A reference electrode, comprising a chamber that includes a cavity and a reference electrolyte, wherein part of the wall of the chamber is made from porous material for bringing the reference electrode into contact with a measuring medium, and wherein the cavity contains a gas that is at a pressure of ≥ 4 bar, **characterised in that** the chamber being at a positive pressure has no opening other than the portion made from porous material, as a result of which no further opening was provided for pressurisation.

4. A reference electrode according to Claim 3, **characterised in that** the gas in the cavity is oxygen, nitrogen and/or air.

5. A reference electrode according to Claim 3 or 4, **characterised in that** it includes a viscous reference electrolyte which contains as a thickening agent a linear polymer, in particular a hydrophilic linear polymer selected from polyacrylates, cellulose derivatives, starch derivatives, dextroses, polyvinyl alcohols, poly-(N-vinylpyrrolidones), poly-(2-vinylpyridines), polyethylene oxides, polyethylene glycols and derivatives thereof, such as polyethylene glycol monomethyl ethers, polyvinyl acetates, polymaleic acids, polyvinyl methyl ethers, gelatines, agar agar and alginates.

6. A reference electrode according to one of Claims 3 to 5, **characterised in that** the reference electrolyte contains an organic solvent as the thickening agent, in particular selected from glycerine, ethylene glycol, propylene glycol, diethanolamine, triethanolamine and hydroxyl-terminated polyethers and/or polyesters.

7. A reference electrode according to one of Claims 3 to 6, **characterised in that** the porous material of the wall is selected from zirconium oxide or silicon oxide having pore radii in the range of from 0.1 to 10 µm.

8. An electrochemical measuring cell, comprising a reference electrode according to one of Claims 3 to 7 and a measuring electrode.

## Revendications

1. Procédé de fabrication d'une électrode de référence, où l'électrode de référence comprend une chambre qui présente une cavité et un électrolyte de référence, où une partie de la paroi de la chambre est constituée d'une matière poreuse pour la mise en contact de l'électrode de référence avec un milieu de mesure et où la cavité contient un gaz se trouvant sous une pression égale ou supérieure à 4 bar,
**caractérisé en ce que**
pour produire la surpression dans l'électrode de référence, on introduit un gaz dans la cavité au travers de la matière poreuse de la paroi.

2. Procédé selon la revendication 1,
**caractérisé en ce que**
la perméabilité de la matière poreuse de la paroi de la chambre pour le gaz introduit pour produire la surpression est supérieure à celle pour l'électrolyte de référence.

3. Électrode de référence comprenant une chambre qui présente une cavité et un électrolyte de référence, où une partie de la paroi de la chambre est constituée d'une matière poreuse pour la mise en contact de l'électrode de référence avec un milieu de mesure, et où la cavité contient un gaz se trouvant sous une pression égale ou supérieure à 4 bar,
**caractérisée en ce que**
la chambre se trouvant sous une surpression ne présente à l'exception de la section en matière poreuse aucun orifice, aucun autre orifice n'étant prévu pour la mise en pression.

4. Électrode de référence selon la revendication 3,
**caractérisée en ce que**
le gaz présent dans la cavité est l'oxygène, l'azote et/ou l'air.

5. Électrode de référence selon la revendication 3 ou 4,
**caractérisée en ce**
**qu'**elle présente un électrolyte de référence visqueux, qui contient comme épaississant un polymère linéaire, en particulier un polymère linéaire hydrophile choisi parmi les polyacrylates, les dérivés de cellulose, les dérivés d'amidon, les dextroses, les alcools polyvinyliques, la poly-(N-vinylpyrrolidone), la poly-(2-vinylpyridine), les oxydes de polyéthylène, les glycols de polyéthylène et les dérivés de ceux-ci, tels que par exemple les monométhyléthers de polyéthylèneglycol, les acétates de polyvinyle, les acides polymaléiques, les méthyléthers de polyvinyle, la gélatine, l'agar-agar et les alginates.

6. Électrode de référence selon l'une des revendications 3 à 5,
**caractérisée en ce que**
l'électrolyte de référence contient un solvant organique comme épaississant, choisi en particulier parmi la glycérine, l'éthylèneglycol, le propylèneglycol, la diéthanolamine, la triéthanolamine et les polyéthers et/ou les polyester à terminaison hydroxyle.

7. Électrode de référence selon l'une des revendications 3 à 6,
**caractérisée en ce que**
la matière poreuse de la paroi est choisie parmi l'oxyde de zirconium ou l'oxyde de silicium présentant des rayons des pores situés dans l'intervalle de 0,1 à 10 µm.

8. Cellule de mesure électrochimique, comprenant une électrode de référence selon l'une des revendications 3 à 7, ainsi qu'une électrode de mesure.
